# FASCICULE DE BREVET EUROPEEN

(11) **EP 1 564 135 B1**
(45) Date de publication et mention de la délivrance du brevet: **31.12.2008**
(21) Numéro de dépôt: 05100867.0
(22) Date de dépôt: 08.02.2005
(51) Int. Cl.: B64C 1/12, B23C 3/16, B64C 1/00

(54) **Procédé et dispositif d'usinage mécanique de panneaux flexibles avec compensation de l'effort d'usinage par un moyen d'appui**
Verfahren und Vorrichtung zur Bearbeitung flexibler Platten mit Kompensation der Bearbeitungskraft durch ein Stützmittel
Process and machine for machining flexible pannels with compensation of the machining thrust by a support means

(30) Priorité: 10.02.2004 FR 0401277
(43) Date de publication de la demande: 17.08.2005
(73) Titulaire: AIRBUS France, 31060 Toulouse (FR)
(72) Inventeur: Hamann, Jean-Christophe, 44500, La Baule (FR)
(74) Mandataire: Schmit, Christian Norbert Marie

(56) Documents cités:
- EP-A- 0 338 117
- EP-A- 1 245 317
- WO-A-20/05046931
- DE-A- 4 125 946
- US-A- 4 762 261

## Description

La présente invention a trait à l'usinage par enlèvement de matière de pièces fines et flexibles en particulier de forme complexe, notamment des panneaux de forme non-développables tels que, par exemple, les panneaux de revêtement de fuselage d'aéronefs.

L'invention vise un procédé d'usinage applicable en particulier à des panneaux de types métalliques, comportant ou non des raidisseurs, ou composites, ou de type « sandwich », dans lesquels doivent être pratiqués des usinages dans l'épaisseur tels que surfaçage ou réalisation de poches ou d'alvéoles, ou des opérations de détourage ou de perçage.

Le document WO-2005/046931-B (Art. 54(3) CBE) décrit un procédé selon le préambule de la revendication 1.

Les panneaux plus particulièrement visés par l'invention sont des panneaux de revêtement dits à double courbure, principalement situés en pointe avant des aéronefs. Ces panneaux, généralement en alliage léger, présentent des épaisseurs comprises dans une gamme allant de 1 à 12 mm selon les aéronefs et les matériaux constitutifs du panneau (alliage d'aluminium, alliage de titane, composite métallique ou à base de résine organique).

La réalisation de ces panneaux nécessite, lorsque le matériau le permet, une mise en forme par étirage sur une forme nécessairement convexe, cependant que les panneaux en matériaux composites sont mis en forme par des techniques de drapage-collage-infusion et compactage.

Le formage par étirage, de par sa productivité et sa flexibilité, reste majoritairement utilisé.

Ce type de formage est réalisé par la combinaison d'une traction sur le panneau et d'un « enveloppement » de ladite forme convexe, si bien que la forme géométriquement connue du panneau (celle qui a été en contact avec la forme d'étirage) est la face interne (concave). Le procédé d'étirage engendre une déformation plastique de la totalité de l'épaisseur du panneau, et produit par suite, par striction, un amincissement de la section. Cette « perte d'épaisseur », de par la nature non-développable de la forme, n'est pas uniforme sur toute la surface du panneau.

Les techniques connues pour la réalisation par usinage mécanique sur de tels panneaux à double courbure des opérations d'usinage dans l'épaisseur telles que celles rappelées plus haut, consiste à mettre et à maintenir ceux-ci en position soit sur des outillages rigides soit sur des lits de ventouses. Dans les deux cas, cette mise en position hyperstatique, ne permet pas de supporter les panneaux en tout point. Cette mise en position imparfaite a deux conséquences sur la qualité et la performance en usinage mécanique :
- l'impossibilité de supporter des efforts de coupe élevés, ce qui pénalise la productivité,
- l'absence de référence physique sur les points qui ne sont pas en contact avec l'élément de mise en position et par suite, l'impossibilité d'obtenir des cotes précise, notamment en épaisseur, sans avoir recours à des systèmes de mesure complexes.

Outre ce problème de mise en référence du panneau, d'autres problèmes se manifestent lors de l'usinage.

La réalisation notamment de poches en fraisage sur des surfaces complexes concaves peut être obtenue par balayage principalement avec des fraises à extrémité sphérique ou avec des fraises toriques. Les contraintes de qualité définissent une rugosité maximale ainsi qu'un ressaut entre passes de balayage maximales admissibles. Dans le cas de pièces sollicitées en fatigue, comme c'est le cas pour des pièces aéronautiques, ces critères sont sévères et l'ordre de grandeur de ces exigences est de 1,6 µm en Rₐ pour la rugosité et 0,04 mm pour la tolérance de ressaut.

L'obtention de tels critères avec une fraise à extrémité sphérique implique des pas de balayage rapprochés, d'où une productivité réduite. Par ailleurs, la partie centrale des fraises à extrémité sphérique étant animée d'une vitesse de coupe nulle, l'enlèvement de matière s'y produit dans de très mauvaises conditions ce qui dégrade la qualité de surface obtenue. Pour résoudre ce dernier point, il suffit d'introduire un dépinçage typiquement compris entre 5 et 20° de sorte que le centre de l'outil ne soit plus en contact avec la surface usinée. Cette pratique pose toutefois des problèmes de gestion locale de normale à la surface, d'accessibilité outil et de collisions, problèmes qui alourdissent la phase de préparation des pièces.

Les fraises toriques permettent à ressaut équivalent d'utiliser des pas de balayage plus élevés, c'est-à-dire un pas de balayage égale au diamètre de la fraise moins le diamètre du tore permet, en théorie, d'obtenir un ressaut nul, ce qui donne un double avantage :
- une meilleure productivité (directement proportionnelle au pas de balayage)
- le centre de l'outil n'est pas sollicité d'où un meilleur état de surface et une durée de vie d'outil accrue.

En revanche, l'utilisation d'un outil torique pose un problème de suivi de trajectoire et de « sur-coupe » géométrique également dénommé « gouging » ou « talonnage ». Cette sur-coupe est variable en fonction du rayon de la trajectoire, et sa variation vient donc s'ajouter aux dispersions d'origines diverses relatives à la tolérance d'épaisseur de fond de maille. Pour résoudre ce problème il est également possible de dépincer l'outil, mais dans le cas d'un outil torique les corrections de trajectoire deviennent complexes.

La présente invention vise à résoudre les divers problèmes ci-dessus.

A cet effet, l'invention a pour objet un procédé d'usinage mécanique de panneaux flexibles selon la revendication 1.

Le procédé de l'invention permet des améliorations significatives par rapport aux procédés existants notamment lors de la réalisation d'empochements requérant une précision de fond de maille par exemple inférieure à 0,2 mm pour des pièces dont la surface est de l'ordre de 10 m² pour une épaisseur de 2,5 mm. En effet, l'application permanente dudit moyen d'appui en opposition à l'outil disposé de l'autre côté du panneau permet de contrôler de manière précise et constante l'épaisseur restante de matière sous l'outil, indépendamment des éventuelles fluctuations locales d'épaisseur inhérentes au procédé d'obtention des panneaux, comme c'est le cas notamment des panneaux métalliques réalisés par étirage, et indépendamment également des éventuels écarts de forme, par rapport à la forme théorique, consécutifs à la précision du procédé d'obtention desdits panneaux bruts.

Bien que l'application de la force de contre-balancement soit indépendante de la cinématique de déplacement de l'outil d'usinage, il est facile de synchroniser les déplacements respectifs de l'outil et dudit moyen d'appui appliquant la force de contre-balancement, en sorte de réaliser lesdits empochements avec une précision de fond de maille, rigoureuse et constante sur toute l'étendue de l'empochement et également de réaliser des usinages de formes concaves selon des trajectoires complexes.

En effet, dans le cas de l'usinage d'une surface concave avec des fraises toriques, il est possible d'accroître localement la force d'appui en regard de l'outil de manière contrôlée évitant ainsi la sur-coupe résultant de la courbure concave de la paroi ainsi usinée, sans avoir à dépincer l'outil, ce qui simplifie sensiblement le pilotage de ce dernier.

Le procédé de l'invention permet par ailleurs des enlèvements de matière à débit de copeau élevé grâce à des profondeurs de passe importantes sans risque de déformation du panneau sous l'effort de coupe.

On va maintenant décrire plus en détail le procédé de l'invention ainsi que les divers modes de mise en oeuvre évoqués ci-dessus avec leurs avantages et intérêts respectifs, en se reportant aux dessins annexés sur lesquels :
- Figure 1 est une vue schématique illustrant le principe du procédé d'usinage selon l'invention ;
- Figure 2 est une vue partielle en coupe d'un panneau illustrant la réalisation d'un empochement conformément au procédé de l'invention ;
- Figure 3 illustre le phénomène de sur-coupe lors de l'usinage d'une surface concave à l'aide d'une fraise torique ;
- Figure 4 illustre la suppression du phénomène de surcoupe de la figure 3 en mettant en oeuvre le procédé de l'invention ;
- Figure 5 illustre l'usinage d'un panneau avec une fraise en biais conformément au procédé de l'invention ;
- Figure 6 illustre la réalisation d'un perçage dans l'axe d'un appui mobile dégagé au centre ;
- Figure 7 illustre un positionnement décalé de l'outil et du moyen d'appui ;
- Figures 8 et 9 illustrent la mise en oeuvre du procédé avec une architecture de machine-outil du type 2X5 axes ;
- Figures 10 et 11 illustrent la mise en oeuvre du procédé avec une architecture de machine-outil du type 2X4 axes ; et
- Figure 12 est une vue d'un détail du dispositif de la figure 11.

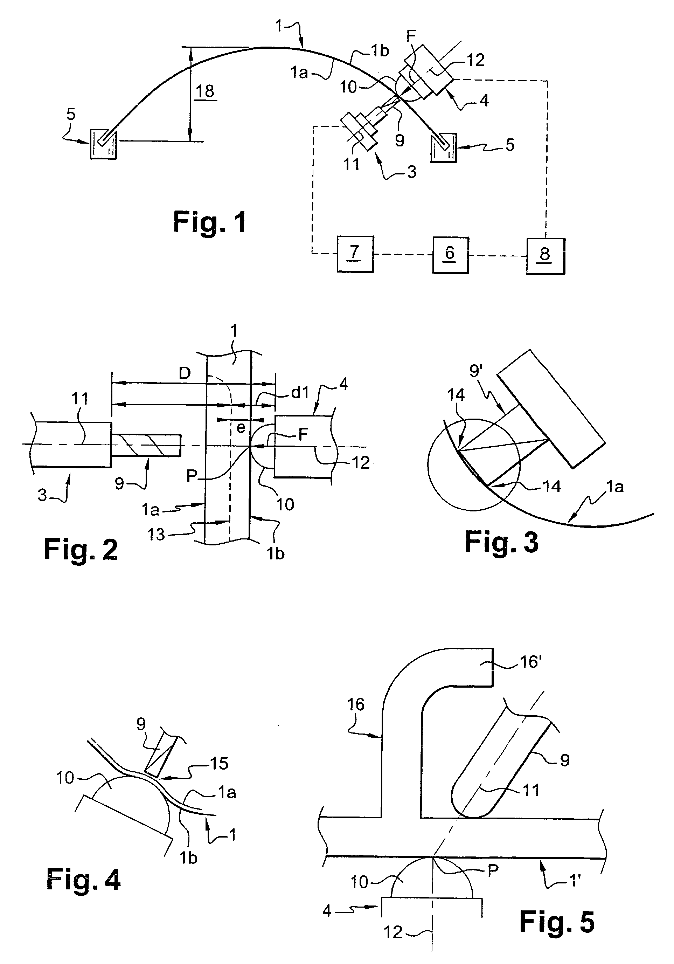

Sur la figure 1 on a représenté en 1 un panneau flexible d'épaisseur mince et de forme non-développable, par exemple un panneau métallique de revêtement de fuselage d'aéronef préalablement mis en forme à la manière connue par étirage sur une forme convexe.

Comme décrit plus haut, un tel panneau 1 présente des variations d'épaisseur sur toute la surface. La face géométriquement connue du panneau 1 est la face interne 1a, concave, qui a été en contact avec la forme d'étirage. La face de référence est la face opposée 1b, convexe, qui correspond à la paroi externe du fuselage qui sera réalisé à l'aide du panneau.

Le panneau 1 étant usiné sur sa face géométriquement connue 1a, alors que la face de référence est la face 1b et que l'épaisseur du panneau est susceptible de variations qui ne sont pas connues, il se pose évidemment un problème d'usinage si l'on veut réaliser notamment des empochements dont les fonds de maille respectent une précision d'usinage très sévère, en regard des dimensions du panneau, par exemple une précision inférieure à 0,2 mm pour un panneau couvrant une surface développée d'environ 10 m².

Ce problème est résolu en procédant comme illustré sur ladite figure 1, à savoir en positionnant constamment en regard de l'outil d'usinage 3 tourné vers la face 1a, un moyen d'appui mobile 4 tourné vers la face 1b, en regard de l'outil 3, le panneau 1 étant tenu à la périphérie par un outillage d'encadrement rigide symbolisé en 5.

L'outil d'usinage 3 et le moyen d'appui mobile 4 sont reliés à des moyens 6 de pilotage par commande numérique par programmation via des moyens conventionnels 7 de déplacement multi-axes de l'outil 3 et des moyens également conventionnels 8 de déplacement de l'appui 4 en regard du panneau 1.

L'outil d'usinage 3 est par exemple équipé d'une fraise torique 9. De préférence, l'appui mobile 4 a la forme d'une surface sphérique 10.

Au cours d'un usinage par exemple d'un empochement dans la face concave 1a du panneau 1, comme il sera décrit plus en détail en référence à la figure 2, l'axe 11 de la fraise 9 et l'axe 12 de la force de contre-balancement F exercée par la sphère 10 du moyen d'appui 4 sur la face 1b, en regard de la fraise 9 sont confondus avec la normale au centre de la zone attaquée par la fraise.

On n'a pas représenté sur la figure 1 des moyens de déplacement et d'application du moyen d'appui 4 contre le panneau 1, ni les moyens, conventionnels, de déplacement de la fraise 9.

En cours d'usinage, non seulement la sphère 10 est constamment en contact avec la face 1b, mais une légère pression est exercée constamment, en sorte de garantir la précision de l'épaisseur e (figure 2) de fond de maille lors de l'usinage d'un empochement 13 sur la face concave 1a du panneau.

En effet, lors de l'usinage dudit empochement 13, la sphère 10 est d'abord amenée au contact de la face 1b du panneau 1, et de préférence avec une force d'application F suffisante pour déformer légèrement élastiquement au point d'application P le panneau 1 en direction de l'outil d'usinage 3.

Si l'épaisseur locale du panneau 1 n'est pas connue avec précision, par contre la distance D entre l'outil 3 et le moyen d'appui 4 est parfaitement connue et indépendante de la position dans l'espace de la partie du panneau 1 attaquée par la fraise.

La distance d1 étant par définition connue et affichée dans la commande numérique pilotant les déplacements de l'outil 3 et de l'appui 4, il suffit de piloter le déplacement axial de la fraise 9 jusqu'à ce que la distance D diminuée de la longueur de la fraise 9 dans l'exemple de la figure 2 atteigne la valeur affichée d1, correspondant à l'épaisseur e. Ce processus est mis en oeuvre sur toute l'étendue de l'empochement 13, l'outil 3 et l'appui 4 étant déplacés parallèlement au panneau en synchronisme, les axes 11, 12 n'étant pas nécessairement colinéaires.

Il est à noter que la réduction locale d'épaisseur du panneau au cours de l'usinage peut s'opérer par déplacement de l'outil 3 relativement à l'appui 4 qui demeure fixe ou inversement, par déplacement de l'appui 4 en direction de l'outil 3 qui n'est pas déplacé.

On peut ainsi obtenir une précision d'épaisseur de fond de maille (e) de ± 0,1 mm sur des panneaux de 1 à 12 mm d'épaisseur et de dimensions pouvant être très importantes de l'ordre de 6 m X 3 m.

Si le panneau 1 présente, au droit de l'empochement 13, un écart de forme par rapport à la forme théorique, consécutif à la précision du procédé d'obtention du panneau brut, ou une variation locale d'épaisseur, voire les deux, cela n'a aucune incidence sur la valeur de l'épaisseur e obtenue en fin d'usinage, le procédé d'usinage selon l'invention étant indifférent à ces écarts.

On peut également procéder à l'enlèvement de copeau à haut débit par des passes importantes sans risque de déformation irréversible du panneau 1 sous l'effort de coupe, le panneau étant tenu des deux côtés, ce qui améliore sensiblement la productivité.

Le procédé permet également l'usinage avec des fraises toriques de la surface concave 1a sans avoir à effectuer de complexes corrections, de trajectoires ou un « dépinçage » de la fraise, ce qui simplifie substantiellement la programmation de la commande numérique de pilotage de l'outil 3.

La figure 3 illustre le phénomène bien connu dit de « sur-coupe » lors de l'usinage d'une surface concave 1a à l'aide d'une fraise torique 9', l'attaque de la matière étant sur l'arête 14 de la fraise plus importante qu'au centre de celle-ci. Pour palier à cela, il suffit, comme illustré par la figure 4, de presser la sphère d'appui 10 contre la face 1b du panneau 1 avec une force suffisante pour déformer localement, légèrement, le panneau en regard de la fraise 9 durant toute l'opération d'usinage. La pression passagère créée par la sphère d'appui 10 provoque seulement en 15, en regard de l'outil 9, une augmentation locale du rayon de courbure de la face 1a pouvant aller jusqu'à une inversion de courbure comme illustré par la figure 4, mais cette pression n'introduit pas de déformation irréversible dans la zone considérée du panneau qui revient élastiquement dans sa forme initiale.

La figure 5 illustre l'usinage d'un panneau 1' à raidisseur 16 présentant une partie 16' en surplomb de la zone d'usinage. Le procédé de l'invention permet, en effet, d'incliner l'axe 11 de la fraise 9 par rapport à l'axe 12 d'application par l'appui mobile 4 de la force de contre-balancement de l'effort d'usinage, l'intersection des deux axes 11, 12 s'opérant de préférence au point P d'application de la force de contre-balancement. Une telle inclinaison de l'axe 11 de la fraise par rapport à la normale à la surface en cours d'usinage permet d'usiner sous ladite partie en surplomb 16'.

D'une manière générale, l'orientation ou inclinaison de l'outil 3 par rapport à l'appui 4 peut être variable et continue au cours de l'usinage, cette orientation étant pilotée par la commande numérique 6.

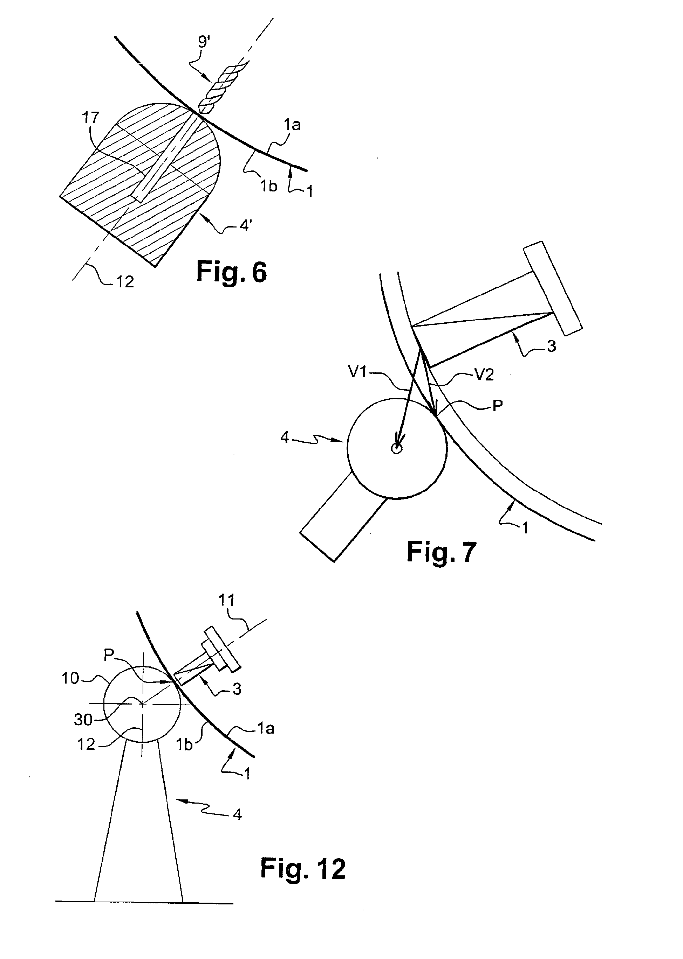

La figure 6 illustre la réalisation d'un perçage à l'aide d'un foret ou d'une fraise conventionnelle 9' dans le panneau 1 conformément au procédé de l'invention, le moyen d'appui 4' étant conformé à cet effet avec un perçage 17 dans l'axe 12, de diamètre suffisant pour accueillir librement le foret ou la fraise 9' après traversée du panneau.

Il est à noter que cette configuration du moyen d'appui mobile 4' peut être utilisée pour réaliser un détourage notamment à l'intérieur du panneau pour le positionnement ultérieur d'éléments tels que portes, trappes ou hublots, en prévoyant un dispositif d'aspiration et d'évacuation des copeaux relié au perçage 17.

Néanmoins, le détourage sera généralement réalisé en décalant comme illustré par la figure 7 l'outil 3 par rapport à un appui sphérique 4 en sorte que l'outil puisse traverser le panneau 1 sans toucher l'appui 4. Dans ce type d'usinage, la commande numérique 6 de la machine détermine en permanence la grandeur et l'orientation soit du vecteur V₁ reliant le centre de l'outil 3 au centre de l'appui sphérique 4, soit du vecteur V₂ reliant le centre de l'outil au point de contact P de l'appui 4 et pilote en conséquence en fonction de valeurs pré-programmées les déplacements et orientations de l'outil et de l'appui.

Il est à noter que ce type d'usinage peut être utilisé pour d'autres usinages que le détourage.

L'amplitude du décalage entre le point P et le centre de l'outil 3 peut atteindre quelques dizaines de millimètres et dépend de la raideur du panneau 1, de la force d'appui (F) et des conditions de coupe.

Le procédé de l'invention permet d'intervenir sur toute la surface du panneau 1, à savoir la zone 18 délimitée sur la figure 1, c'est-à-dire à l'exception des zones périphériques de bridage (5) du panneau.

Au cours des usinages effectués sur le panneau 1 l'ensemble cadre 5 + panneau 1 peut être bien entendu également piloté par la commande numérique 6, en synchronisme avec les déplacements de l'outil 3 et de l'appui mobile 4, selon le type d'usinage à réaliser.

Le procédé de l'invention permet d'effectuer des usinages soit en asservissant en effort le moyen d'appui 4 normalement au point de contact soit en asservissant en position ledit moyen d'appui, c'est à dire en pilotant sa position par rapport au profil théorique du panneau défini par ce dernier monté isostatiquement sur l'outillage d'encadrement (5, 5').

Le premier mode d'asservissement est utilisé préférentiellement au voisinage des bords du panneau où la rigidité locale est supérieure, alors que l'asservissement en position est préféré dans la partie centrale du panneau. Au cours de l'usinage du panneau, on peut bien entendu passer d'un mode d'asservissement à l'autre.

Comme il a été dit plus haut, le principe illustré par la figure 1 peut être mis en oeuvre suivant différentes architectures de machine-outil.

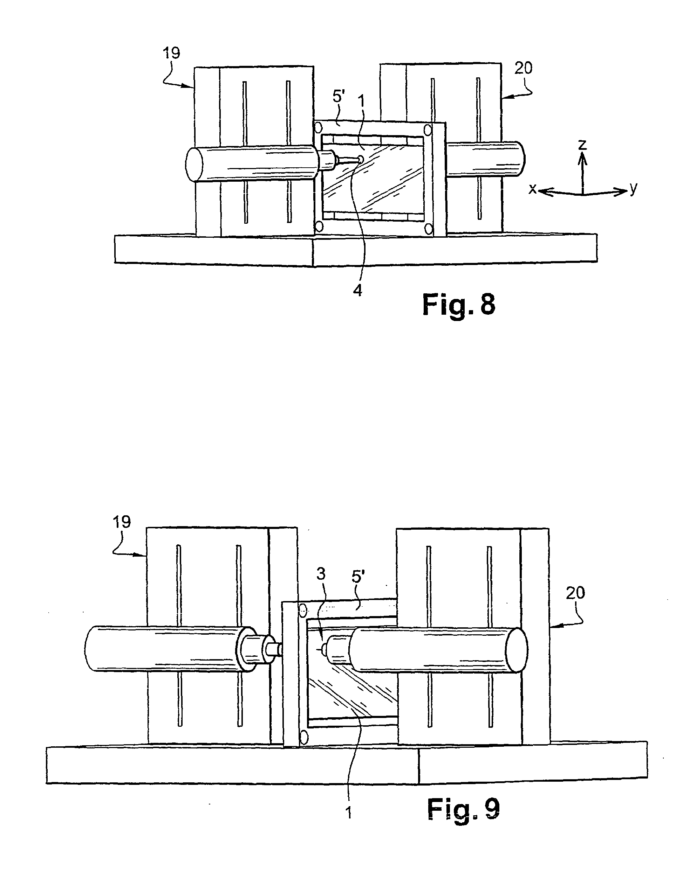

C'est ainsi qu'à titre d'exemple on peut mettre en oeuvre une architecture de type 2X5 axes illustrée par les figures 8 et 9. Dans cette architecture le panneau 1 est placé verticalement dans un cadre rigide 5' qui le maintient sur sa périphérie. La machine est constituée de deux structures 5 axes, 19, 20 pilotant respectivement l'appui mobile 4 (figure 8) et la tête d'usinage 3 (figure 9).

Les structures 19, 20 sont montées mobiles de part et d'autre du cadre 5' qui est fixe. La tête d'usinage 3 et l'appui 4 sont mobiles suivant les axes cartésiens X, Y, Z, ainsi qu'en rotation autour des axes X et Z.

Cette architecture permet l'interchangeabilité des éléments 3 et 4 et donc l'usinage sur les deux faces du panneau 1, sans démontage de celui-ci.

La tête d'usinage 3 peut être pilotée indépendamment de l'appui 4, ce qui permet de gérer des trajectoires et des orientations d'outil complexes, avec dépinçage par exemple, tout en conservant une distance constante entre l'extrémité de l'outil (point générateur de la surface usinée) et l'extrémité (point P) de l'appui 4.

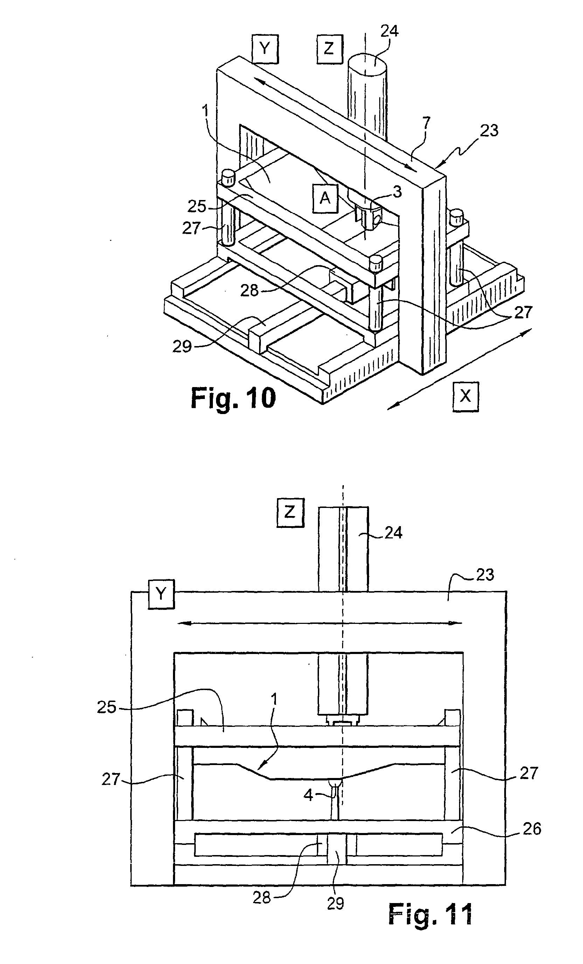

Les figures 10 et 11 illustrent une autre architecture, de type 2X4 axes caractérisée par le fait que l'appui arrière (sphérique) n'est pas orienté par rapport à la normale locale. Afin de garantir l'épaisseur usinée, l'outil est orienté de manière à ce que son axe pointe le centre de la sphère de l'appui arrière.

A cet effet, la machine est basée sur une architecture « portique », le portique 23 étant fixe et supportant un coulisseau 24 se déplaçant en translation selon les axes Z et Y. Il supporte une tête d'usinage 3 (figure 10) de type « twist » en rotation autour des axes Z (axes de rotation C) et de l'axe A (axe horizontal perpendiculaire à Z).

Le panneau 1 est maintenu périphériquement par un cadre horizontal 25 supporté par un chariot 26 par l'intermédiaire de quatre colonnes de guidage 27 en sorte de se déplacer selon l'axe Z. Un coulisseau 28 supportant l'appui sphérique 4 (figure 11) se déplace selon l'axe X sur un second chariot 29 mobile selon l'axe Y. Comme on peut l'observer plus précisément sur la figure 12, sur une telle machine, l'axe 12 du moyen d'appui mobile 4 n'est pas orienté selon la normale au point d'appui P sur la surface (1b) du panneau, l'axe 11 de l'outil passant par le centre 30 de la partie sphérique 10 de l'appui 4, lequel centre 30 est sur l'axe 12 dudit appui.

D'une manière générale, le procédé de l'invention s'applique à des opérations d'usinage telles que détourage, perçage, usinage dans l'épaisseur sur des panneaux dits à double courbure de forme développable ou non, en une seule opération sans démontage du panneau.

Il est possible également de réaliser des usinages à la périphérie des panneaux hormis dans les parties en prise avec l'outillage de cadrage/maintien.

Les panneaux peuvent être métalliques et mis en forme au préalable par tous procédés appropriés. Ils peuvent être aussi en matériaux composites et mis en forme par toutes techniques adaptées ou du type stratifié.

## Revendications

1. Procédé d'usinage mécanique de panneaux flexibles en particulier de forme complexe, plus particulièrement destiné à usiner des empochements (13), dans lequel le panneau à usiner (1) est maintenu fixe sur sa périphérie sur un support rigide (5, 5', 25) et un outil d'usinage (3) est appliqué contre l'une (1a) des faces dudit panneau (1) et piloté pour réaliser l'usinage désiré, ledit procédé consistant à au moins contre-balancer l'effort d'usinage exercé par l'outil (3) sur le panneau (1) par l'application, par l'intermédiaire d'un moyen d'appui mobile approprié, sur la face (1b) du panneau (1) opposée à celle (1a) d'application de l'outil (3), d'une force (F) sensiblement en regard dudit outil, ledit moyen d'appui (4) étant indépendant de ce dernier et étant appliqué de manière permanente lors de son déplacement, **caractérisé en ce qu'**on mesure en permanence au cours de l'usinage la distance (D) entre l'outil (3) et le moyen d'appui (4) et on commande l'arrêt de l'avance de l'outil (3) lorsque ladite distance (D) atteint une valeur prédéterminée.

2. Procédé selon la revendication 1, **caractérisé en ce que** l'outil (3) et le moyen d'appui (4) sont déplacés en synchronisme et les axes (11, 12) de l'outil (3) et du moyen d'appui (4) sont confondus.

3. Procédé selon la revendication 2, **caractérisé en ce que** les axes (11, 12) de l'outil (3) et du moyen d'appui (4) sont confondus avec la normale au centre de la zone en cours d'usinage.

4. Procédé selon la revendication 2 ou 3, **caractérisé en ce que** la force (F) exercée par le moyen d'appui (4) est au moins égale à l'effort d'usinage exercé par l'outil (3).

5. Procédé selon la revendication 1, **caractérisé en ce que** l'on mesure en permanence la grandeur et l'orientation d'un vecteur (V1,V2) reliant le centre de l'outil (3) au centre du moyen d'appui (4) ou au point de contact (P) du moyen d'appui (4) avec le panneau à usiner (1) et on pilote à partir de ladite mesure et en fonction de valeurs pré-programmées les déplacements et orientations de l'outil (3) et du moyen d'appui (4).

6. Procédé selon la revendication 5, **caractérisé en ce que** l'outil (3) et le moyen d'appui (4) sont décalés.

7. Procédé selon l'une des revendications 1 à 6, **caractérisé en ce que** le moyen d'appui (4) est asservi en effort.

8. Procédé selon l'une des revendications 1 à 6, **caractérisé en ce que** le moyen d'appui (4) est asservi en position.

9. Procédé selon l'une des revendications 1 à 8, **caractérisé en ce que** la force (F) du moyen d'appui (4) est exercée sur la face convexe (1 b) du panneau (1) en sorte de créer sur la face opposée (1a) une augmentation locale (15) du rayon de courbure pouvant aller jusqu'à une inversion de courbure en regard de l'outil (3), la déformation du panneau (1) étant élastique et non-irréversible.

10. Procédé selon la revendication 1, **caractérisé en ce que** l'outil (3) et le moyen d'appui (4) sont déplacés en synchronisme et leurs axes (11, 12) ne sont pas alignés et s'intersectent.

11. Procédé selon la revendication 10, **caractérisé en ce que** l'inclinaison de l'outil (3) est variable.

12. Procédé selon la revendication 1, **caractérisé en ce que** l'outil (3) et le moyen d'appui (4) sont pilotés indépendamment.

13. Procédé selon la revendication 10, **caractérisé en ce que** l'axe (11) de l'outil (3) est normal à la surface usinée (1 a) du panneau (1).

14. Procédé selon la revendication 10, **caractérisé en ce que** l'axe (12) du moyen d'appui (4) est normal à la surface (1 b) du panneau (1) et l'axe (11) de l'outil (3) intersecte ledit axe (12) du moyen d'appui au point (P) d'application dudit moyen (4) contre ladite face (1 b) du panneau.

## Claims

1. A method for the mechanical machining of flexible panels, in particular complex in shape, more especially intended for machining pockets (13), in which the panel to be machined (1) is held fixed at its periphery on a rigid support (5, 5', 25) and a machining tool (3) is applied against one (1a) of the faces of said panel (1) and controlled so as to carry out the desired machining, said method providing at least counterbalancing the machining force exerted by the tool (3) on the panel (1) by the application, by means of suitable movable abutment means, to the face (1b) of the panel (1) opposite to that (1a) where the tool (3) is applied, of a force (F) substantially opposite said tool, said abutment means (4) being independent of the latter and being applied continuously during its movement, **characterised in that** during the machining the distance (D) between the tool (3) and the abutment means (4) is measured continuously and the stoppage of the advance of the tool (3) is demanded when said distance (D) reaches a predetermined value.

2. A method according to claim 1, **characterised in that** the tool (3) and the abutment means (4) are moved in synchrony and the axes (11, 12) of the tool (3) and abutment means (4) are merged.

3. A method according to claim 2, **characterised in that** the axes (11, 12) of the tool (3) and abutment means (4) are merged with the normal to the centre of the area being machined.

4. A method according to claim 2 or 3, **characterised in that** the force (F) exerted by the abutment means (4) is at least equal to the machining force exerted by the tool (3).

5. A method according to claim 1, **characterised in that** the magnitude and orientation of a vector (V1, V2) connecting the centre of the tool (3) to the centre of the abutment means (4) or to the point of contact (P) of the abutment means (4) with the panel to be machined (1) is measured continuously and, from said measurement and according to pre-programmed values, the movements and orientations of the tool (3) and abutment means (4) are controlled.

6. A method according to claim 5, **characterised in that** the tool (3) and the abutment means (4) are offset.

7. A method according to one of claims 1 to 6, **characterised in that** the abutment means (4) is controlled in terms of force.

8. A method according to one of claims 1 to 6, **characterised in that** the abutment means (4) is controlled in terms of position.

9. A method according to one of claims 1 to 8, **characterised in that** the force (F) of the abutment means (4) is exerted on the convex face (1b) of the panel (1) so as to create on the opposite face (1a) a local increase (15) in the radius of curvature that may go as far as a reversal of curvature opposite the tool (3), the deformation of the panel (1) being elastic and non-irreversible.

10. A method according to claim 1, **characterised in that** the tool (3) and the abutment means (4) are moved in synchrony and their axes (11, 12) are not aligned and intersect each other.

11. A method according to claim 10, **characterised in that** the inclination of the tool (3) is variable.

12. A method according to claim 1, **characterised in that** the tool (3) and the abutment means (4) are controlled independently.

13. A method according to claim 10, **characterised in that** the axis (11) of the tool (3) is normal to the machined surface (1a) of the panel (1).

14. A method according to claim 10, **characterised in that** the axis (12) of the abutment means (4) is normal to the surface (1b) of the panel (1) and the axis (11) of the tool (3) intersects said axis (12) of the abutment means at the point (P) of application of said means (4) against said face (1b) of the panel.

## Patentansprüche

1. Verfahren zur mechanischen Bearbeitung von flexiblen Platten, insbesondere von komplexer Form, welches besonders dafür vorgesehen ist Vertiefungen (13) zu bearbeiten, in welchem die zu bearbeitende Platte (1) an ihren Rädern anhand einer steifen Halterung (5, 5', 25) festgehalten wird und in welchem ein Bearbeitungswerkzeug (3) gegen eine der Seiten (1a) der besagten Platte (1) angesetzt wird, und gesteuert wird, um die gewünschte Bearbeitung zu realisieren, wobei das besagte Verfahren aus mindestens dem Ausgleichen der Bearbeitungskräfte besteht, welche durch das Ansetzen des Werkzeugs (3) auf der Platte (1) ausgeübt werden, anhand eines geeigneten mobilen Druckmittels auf der Seite (1b) der Platte (1), welche der (1a) der Anwendung des Werkzeugs (3) entgegengesetzt ist, mit einer Kraft (F) merklich in Richtung des besagten Werkzeuges, wobei das besagte Druckmittel (4) unabhängig von letzterem ist und ständig während seiner Verlagerung in Kontakt steht, **gekennzeichnet dadurch, dass** ständig während der Bearbeitung der Abstand (D) zwischen dem Werkzeug (3) und dem Druckmittel (4) gemessen wird und das Stoppen der Voreilung des Werkzeuges (3) bewirkt wird, wenn der besagte Abstand (D) einen vordefinierten Wert erreicht.

2. Das Verfahren gemäß Anspruch 1, **gekennzeichnet dadurch, dass** das Werkzeug (3) und das Druckmittel (4) synchron verschoben werden und die Achsen (11, 12) des Werkzeugs (3) und des Druckmittels (4) miteinander übereinstimmen.

3. Das Verfahren gemäß Anspruch 2, gekennzeichet **dadurch**, dass die Achsen (11, 12) des Werkzeugs (3) und des Druckmittels (4) mit der Normalen im Zentrum der Zone, welche bearbeitet wird, übereinstimmen.

4. Das Verfahren gemäß Anspruch 2 oder 3, **gekennzeichnet dadurch, dass** die Kraft (F), welche durch das Druckmittel (4) bewirkt wird, mindestens der Bearbeitungskraft, welche durch das Werkzeug (3) bewirkt wird, entspricht.

5. Das Verfahren gemäß Anspruch 1, **gekennzeichnet dadurch, dass** man ständig die Größe und die Ausrichtung eines Vektors (V1, V2) misst, welcher das Zentrum des Werkzeugs (3) mit dem Zentrum des Druckmittels (4) oder mit dem Kontaktpunkt (P) des Druckmittels (4) mit der zu bearbeitenden Platte (1) verbindet und dass ausgehend von der besagten Messung und in Abhängigkeit von vorprogrammierten Werten die Verschiebungen und Ausrichtungen des Werkzeuges (3) und des Druckmittels (4) gesteuert werden.

6. Das Verfahren gemäß Anspruch 5, **gekennzeichnet dadurch, dass** das Werkzeug (3) und das Druckmittel (4) zueinander verschoben sind.

7. Das Verfahren gemäß einer der Ansprüche 1 bis 6, **gekennzeichnet dadurch, dass** das Druckmittel (4) mit Kraft gehalten wird.

8. Das Verfahren gemäß einem der Ansprüche 1 bis 6, **gekennzeichnet dadurch, dass** das Druckmittel (4) in Position gehalten wird.

9. Das Verfahren gemäß einer der Ansprüche 1 bis 8, **gekennzeichnet dadurch, dass** die Kraft (F) des Druckmittels (4) auf der konvexen Seite (1b) der Platte (1) ausgeübt wird, sodass auf der entgegen gesetzten Seite (1a) eine lokale Steigerung (15) des Wölbungsradius erzeugt wird, welcher bis zu einer Inversion der Wölbung in Richtung des Werkzeugs (3) gehen kann, wobei die Verformung der Platte (1) elastisch und nicht irreversibel ist.

10. Das Verfahren gemäß Anspruch 1, gekennzeichet **dadurch**, dass das Werkzeug (3) und das Druckmittel (4) synchron verschoben werden und dass ihre Achsen (11, 12) nicht gleich ausgerichtet sind und sich schneiden.

11. Das Verfahren gemäß Anspruch 10, **gekennzeichnet dadurch, dass** die Neigung des Werkzeugs (3) variabel ist.

12. Das Verfahren gemäß Anspruch 1, **gekennzeichnet dadurch, dass** das Werkzeug (3) und das Druckmittel (4) unabhängig voneinander gesteuert werden.

13. Das Verfahren gemäß Anspruch 10, **gekennzeichnet dadurch, dass** die Achse (11) des Werkzeugs (3) normal zu der bearbeiteten Oberfläche (1a) der Platte (1) ist.

14. Das Verfahren gemäß Anspruch 10, **gekennzeichnet dadurch, dass** die Achse (12) des Druckmittels (4) normal zu der Oberfläche (1b) der Platte (1) ist und die Achse (11) des Werkzeugs (3) die besagte Achse (12) des Druckmittels am Punkt (P) schneidet, an welchem das besagte Mittel (4) gegen die besagte Seite (1b) der Platte ansetzt.
